# EUROPÄISCHE PATENTSCHRIFT

(11) **EP 0 831 242 B1**
(45) Veröffentlichungstag und Bekanntmachung des Hinweises auf die Patenterteilung: **05.12.2001**
(21) Anmeldenummer: 97115551.0
(22) Anmeldetag: 08.09.1997
(51) Int. Cl.: F16D 55/2265

(54) **Gleitsattelscheibenbremse**
Sliding caliper disc brake
Frein à disque à étrier coulissant

(30) Priorität: 11.09.1996 DE 19636940
(43) Veröffentlichungstag der Anmeldung: 25.03.1998
(73) Patentinhaber: WABCO Perrot Bremsen GmbH, 68229 Mannheim (DE)
(72) Erfinder: Antony, Paul, Dipl.-Ing., 67550 Worms (DE); Falter, Wolfgang, Dipl.-Ing., 69118 Heidelberg (DE); Kloos, Eugen, Dipl.-Ing., 64625 Bensheim (DE); Rupprecht, Bernd, 68535 Edingen-Neckarhausen (DE)
(74) Vertreter: Patentanwälte Leinweber & Zimmermann

(56) Entgegenhaltungen:
- EP-A- 0 510 742
- DE-A- 3 101 508
- DE-A- 3 903 744
- DE-A- 4 010 459

## Beschreibung

Die Erfindung betrifft eine Gleitsattelscheibenbremse nach dem Oberbegriff des Anspruchs 1. Eine solche Gleitsattelscheibenbremse ist beispielsweise aus der DE-A-31 01 508 bekannt.

Ähnliche Gleitsattelscheibenbremsen sind bekannt aus der DE-A-40 10 459 und aus der EP-A-0 510 742.

Bei den bekannten Gleitsattelscheibenbremsen ist im Inneren des Bremssattels einseitig eine Zuspannvorrichtung vorgesehen, und die beiden Schenkel des Sattels übergreifen eine Bremsscheibe. Der Bremssattel ist axial auf Führungsbolzen verschieblich gelagert bzw. geführt, die ihrerseits entweder an einem Bremsträger oder direkt an einem Achsteil des Fahrzeugs starr befestigt sind. Beidseits der Bremsscheibe sind Bremsbacken derart geführt und abgestützt, daß der zuspannseitige Bremsbelag von der Zuspannvorrichtung und der felgenseitige Bremsbelag über die Reaktionskraft des Gleitsattels vom felgenseitigen Sattelschenkel gegen die Bremsscheibe gedrückt werden.

Wie bereits oben erwähnt, ragen die Führungsbolzen mit ihrem freien Ende aus der Durchgangsöffnung heraus. Mit zunehmender Sattelverschiebung infolge Belagverschleißes verkürzt sich ihr Überstand.

Bei der oben erwähnten DE-A-40 10 459 ist die Dichtung als in ihrer Form vergleichsweise beständige Kappe ausgeführt, die das aus der Durchgangsöffnung herausragende freie Ende des Führungsbolzens überwölbt. Verschiebt sich nun der Sattel infolge Belagverschleißes relativ zum Führungsbolzen, so ragt die Kappe immer weiter in den vergleichsweise eng bauenden Radlaufraum hinein. Hinzu kommt, daß insbesondere dann, wenn sich der Führungsbolzen nicht mehr in voller Länge in die Kappe hineinerstreckt und damit eine gewisse "Verstärkung" der Kappe wegfällt, aber auch schon vorher, Beschädigungen der als Kappe ausgeführten Dichtung durch anschlagende Fahrzeugteile möglich sind.

Nach der EP-A-0 510 742 ist die Dichtung mit einem Wulst versehen, der in eine entsprechende Ringnut am freien Ende des Führungsbolzens eingreift. Dadurch gleicht sich die Dichtung in gewisser Weise dem mit zunehmendem Bremsverschleiß abnehmenden Überstand des Führungsbolzens über die Durchgangsöffnung an. Da sich die Ringnut jedoch auf der im Bereich als Gleitfläche für den Sattel dienenden Mantelfläche des Führungsbolzens befindet, besteht allerdings das Problem, daß bereits beim Bremsenzusammenbau der in der Ringnut liegende Wulst abgeschert oder beim Bremseneinbau durch anschlagende Fahrzeugteile aus der Ringnut gedrückt wird, woraufhin die Abdichtfunktion nicht mehr gewährleistet ist.

Wie vorstehend beschrieben, besteht bei beiden bekannten Gleitsattelscheibenbremsen, von denen die Erfindung ausgeht, die Gefahr des Verlustes der Abdichtung des Ringraums zwischen der Innenwand der Durchgangsöffnung und dem Führungsbolzen. Tritt nun infolge des Dichtungsverlustes Schmutz oder Feuchtigkeit in den genannten Ringraum ein, so kann die für die Funktion der Bremse unerläßliche Leichtgängigkeit der Verschiebung einzelner Bremsenteile gegeneinander verlorengehen.

Der Erfindung stellt sich mithin die Aufgabe, die bekannten Gleitsattelscheibenbremsen derart zu verbessern, daß die Abdichtung des Ringraums zwischen der Innenwand der Durchgangsöffnung und dem Führungsbolzen gegen Beschädigung und gegen sonstige Beeinträchtigungen geschützt ist.

Erfindungsgemäß wird die gestellte Aufgabe mit einer Eleitsattelscheibenbremse nach Anspruch 1 gelöst.

Die Erfindung beruht mithin auf folgendem Prinzip: Die Dichtung umschließt das freie Ende des Führungsbolzens vollständig, ist aber gleichzeitig so ausgelegt, daß sie sich mit abnehmendem Überstand des Bolzens aus der Durchgangsöffnung verkürzt. Mithin macht sie sich den Vorteil zunutze, die Dichtung zum einen durchgehend durch Anlage an dem freien Ende des Führungsbolzens zu "stärken", so daß schon hieraus ein gewisser Schutz gegen Beschädigungen resultiert, zum anderen aber jedes unnötige Hineinragen in den Radlaufraum zu vermeiden, weil sie sich ja mit abnehmendem Überstand entsprechend ihrer inneren Vorspannung zusammenzieht und somit verkürzt. Darüber hinaus vermeidet die Erfindung durch die topfförmige Ausgestaltung der Dichtung die Notwendigkeit der Halterung der Dichtung an dem freien Ende des Führungsbolzens mittels beschädigungsanfälliger Halterungseinrichtungen, wie etwa der bekannten Wulst-Nut-Verbindung. Als weiterer Vorteil kann durch den Wegfall der Ringnut zudem ein größerer Bereich der Axiallänge des Führungsbolzens für die Sattelverschiebung genutzt werden, wodurch indirekt eine Verkürzung der Führungsbolzenlänge erzielt werden kann.

Mithin schafft die Erfindung eine Gleitsattelscheibenbremse, bei der die Abdichtung des Ringraums zwischen der Innenwand der Durchgangsöffnung und dem Führungsbolzen verläßlich abgedichtet und gegen Beschädigungen und sonstige Beeinträchtigungen geschützt ist.

Prinzipiell kann die Halteeinrichtung beliebiger Art sein. Bevorzugt ist es jedoch, daß eine die Durchgangsöffnung umlaufende und in Axialrichtung des Führungsbolzens ausgerich- r tete Ringschulter vorgesehen ist, an der die Halteeinrichtung lösbar befestigt ist.

Dabei kann die Ringschulter von der Mantelfläche eines der Durchgangsöffnung vorgelagerten Ringansatzes des Sattels oder von der Seitenwand eines der Durchgangsöffnung vorgelagerten Sacklochs gebildet sein. Im Falle des vorgelagerten Sacklochs ergibt sich insgesamt eine Stufenbohrung.

Eine besonders einfache Montage und Demontage der Halteeinrichtung ergibt sich dann, wenn die Halteeinrichtung nach Art eines Preßsitzes an der Ringschulter befestigt ist.

Die Halteeinrichtung kann prinzipiell beliebig ausgestaltet sein. Bevorzugt weist sie einen ersten Radialansatz auf, mit dem sie einen ersten Radialansatz der Dichtung hintergreift. Bei diesem Aufbau genügt es zur Halterung der Dichtung, daß die Halteeinrichtung in Axialrichtung des Führungsbolzens festgelegt ist.

Wiederum zur Vereinfachung der Montage und der Demontage der Halteeinrichtung weist die Halteeinrichtung bevorzugt einen zweiten Radialansatz auf, der zum Lösen der Halteeinrichtung mit einem Werkzeug hintergriffen werden kann.

Dabei kann zur weiteren Vereinfachung eine Abschrägung einer bei angebrachter Halteeinrichtung dem zweiten Radialansatz benachbarten Stirnfläche des Sattels vorgesehen sein.

Bevorzugt besitzt der erste Radialansatz der Dichtung rechteckigen Querschnitt und weist Dichtlippen auf, die an dem Führungsbolzen, der Halteeinrichtung bzw. einer Stirnseite des Sattels anliegen.

Zum Schutz gegen Beschädigung ist es erfindungsgemäß besonders bevorzugt, daß ein zweiter Radialansatz an einem dem freien Ende des Führungsbolzens benachbarten Endabschnitt der Dichtung vorgesehen ist.

Auch ist es zur weiteren Stärkung der Dichtung gegen Beschädigung und sonstige Beeinträchtigung bevorzugt, daß die Dichtung in dem der Stirnseite des freien Endes des Führungsbolzens benachbarten Bereich dicker als an ihren Seitenwänden ist. Insbesondere kann durch diese Verdickung der Dichtung am "Topfboden" auch dann einer Beschädigung der Dichtung vorgebeugt werden, wenn die Bremse mit angebrachter Dichtung ausgebaut ist und mit ihrem Eigengewicht auf dem "Topfboden" aufliegt.

Dabei umgreift der dickere Bereich der Dichtung teilweise auch den Außenumfang des Führungsbolzens. Diese Ausgestaltung bietet weitgehenden Schutz gegen Beschädigungen.

Bevorzugt ist die Dichtung in Form einer Faltenmanschette ausgeführt.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: eine Schnittansicht eines ersten Ausführungsbeispiels der Erfindung,
- Fig. 2: eine vergrößerte Teilansicht der Darstellung nach Fig. 1 während des Anbringens der Dichtung,
- Fig. 3: die Darstellung nach Fig. 2, jedoch bei angebrachter Dichtung,
- Fig. 4: die Darstellung nach Fig. 3, jedoch bei verringertem Überstand des Führungsbolzens infolge Belagverschleißes,
- Fig. 5: die Darstellung nach Fig. 3, jedoch mit modifizierter Halterung der Dichtung an dem Sattel.

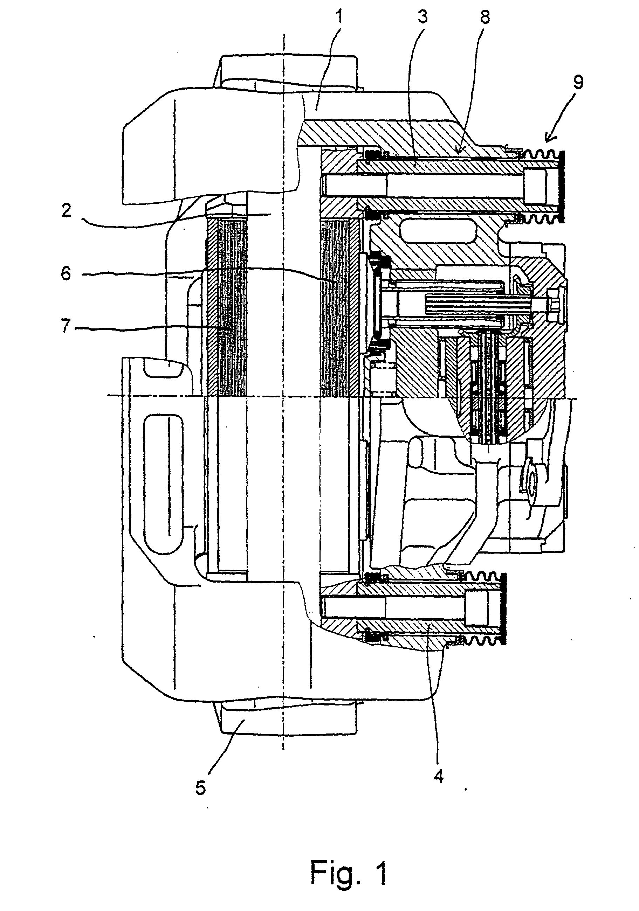

Fig. 1 zeigt eine Gleitsattelscheibenbremse. Die Gleitsattelscheibenbremse weist einen Sattel 1 auf, 1 der in üblicher Weise mit seinen beiden Schenkeln eine Bremsscheibe 2 übergreift. Zwei Führungsbolzen 3, 4 sind an einem Bremsenträger 5 befestigt. Es sei allerdings darauf hingewiesen, daß die Erfindung nicht auf Bremsen mit zwei Führungsbolzen beschränkt ist, es kann auch nur ein Führungsbolzen vorgesehen sein. Ferner können auch mehr als zwei Führungsbolzen der Führung des Sattels 1 dienen. Die Bremsbeläge sind mit den Bezugszahlen 6, 7 bezeichnet.

Der Führungsbolzen 3 erstreckt sich durch eine Durchgangsöffnung 8 des Sattels 1 hindurch, wobei er mit seinem freien Ende aus der Durchgangsöffnung 8 herausragt. Die Stirnseite des Führungsbolzens 3 ist mit der Bezugszahl 11 bezeichnet. Bremsscheibenabgewandt ist an dem Sattel 1 ein Haltebereich 14 gebildet, der bei den dargestellten Ausführungsbeispielen in Form einer die Durchgangsöffnung 8 umgebenden und im wesentlichen kreisförmig verlaufenden Ringschulter 14a, 14b ausgeführt ist. Der Haltebereich 14 dient der Halterung einer Dichtung 9 am Bremssattel 1.

Durch diese Ausführung der Halterung der Dichtung 9 am Sattel 1 ist es nicht erforderlich, daß der Sattel 1 die Dichtung 9 an irgendeiner Stelle hintergreift. Daher kann die Dichtung 9 montiert und demontiert werden, ohne daß es erforderlich wäre, den Sattel 1 von dem Führungsbolzen 3 abzuziehen.

Die Dichtung 9 ist in den dargestellten Ausführungsbeispielen in Form einer topfförmigen Faltenmanschette ausgeführt.

Zur Halterung der Dichtung 9 an der Ringschulter 14a, 14b ist eine Hülse 13 vorgesehen, die bei den dargestellten Ausführungsformen sowohl einen sich radial einwärts erstreckenden Bund 15 als auch einen sich radial auswärts erstreckenden Bund 16 aufweist. An der offenen Seite 12 der Dichtung 9 ist ein sich an einen Faltengrund 17 anschließender Radialwulst 18 vorgesehen, der sich nach radial auswärts erstreckt und der von dem sich nach radial einwärts verlaufenden Bund 15 der Hülse 13 hintergriffen wird. Damit ist eine sehr leicht herstellbare Verbindung zwischen der Hülse 13 und der Dichtung 9 realisiert. Der Durchmesser der Hülse 13 ist so gewählt, daß die Hülse 13 nach Art eines Preßsitzes auf der Ringschulter 14a, 14b des Haltebereichs 14 sitzt. Daher muß sie zur Anbringung nur auf die genannte Ringschulter 14a, 14b geschoben werden, wobei zu diesem Zweck ein entsprechendes Werkzeug gegen den Radialbund 16 gedrückt wird, bis der Radialbund 16 an einer Stirnfläche 19, 19a des Sattels 1 anliegt. Damit kann die Dichtung 9 einfach angebracht werden, wobei sie gleichzeitig gegen ihre elastische Rückstellkraft gespannt wird.

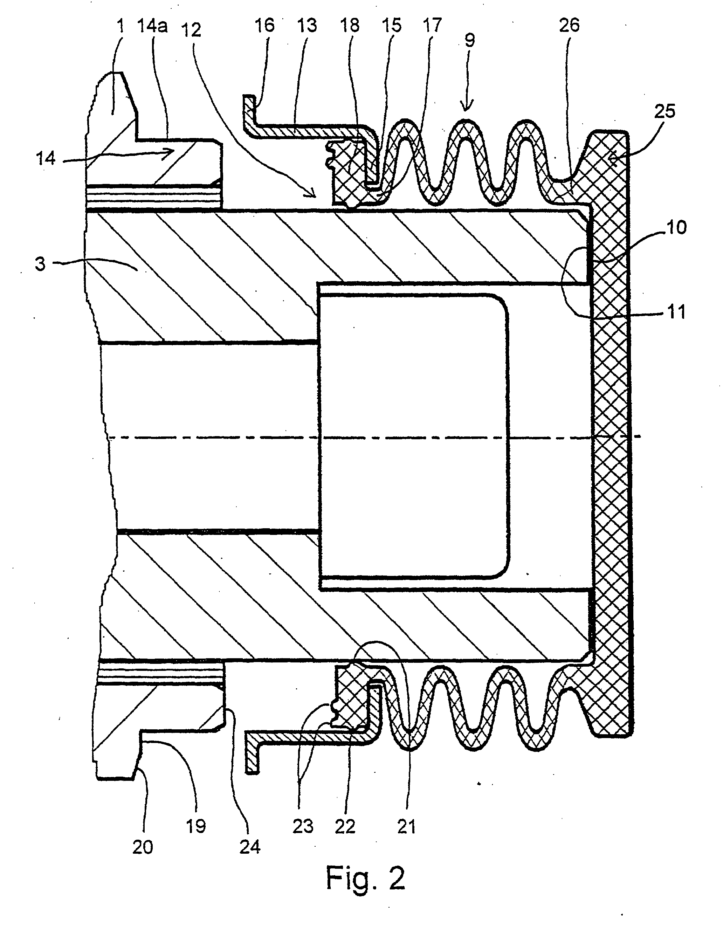

Die Stirnfläche 19 (Fig. 2 bis 4) geht etwa nach der der halben Radiallänge des Radialbunds 16 entsprechenden Strecke in eine Schrägfläche 20 über, wodurch ein freier Ringraum zwischen dem Radialbund 16 und der Schrägfläche 20 gebildet ist. Dies bringt den Vorteil mit sich, daß ein Flachwerkzeug in den freien Ringraum eingesetzt werden kann, um die Hülse 13 von dem rohrförmigen Haltebereich 14 abzuheben, ohne daß dabei Dichtflächen beschädigt werden.

Der Radialwulst 18 ist im Querschnitt im wesentlichen rechteckig ausgebildet. Er trägt Dichtlippen 21, 22, 23. Die Dichtlippen 21, 22 und 23 sind umlaufend ausgebildet. Die radial innen liegende Dichtlippe 21 dient zur Abdichtung an der Mantelfläche des Führungsbolzens 3. Die radial außen liegende Dichtlippe 22 dient zur Abdichtung an der Innenseite der Hülse 13. Die wenigstens eine - hier zwei - in Axialrichtung ausgerichtete Dichtlippe 22 dient zur Abdichtung einer Stirnfläche 24, 24a des Haltebereichs 14.

Die Funktionen der Dichtlippen 21, 22, 23 sind wie folgt:

Die Dichtlippe 21 verhindert ein Eindringen beispielsweise von Feuchtigkeit für den Fall, daß es zu einer Materialbeschädigung im Faltenbereich kommen sollte. Eine Hinterwanderung über die Verbindung zwischen dem Radialbund 15 und dem Wulst 18 ist ebenfalls nicht möglich, weil die Dichtlippe 22 an der Innenseite der Hülse 13 dichtend anliegt.' Ein weiterer Schutz wird durch die zwei an der Stirnfläche 24, 24a anliegenden kreisförmigen Dichtlippen 23 für den Fall erzielt, daß Feuchtigkeit zwischen die Flächen 19 bzw. 19a, 20 und den Radialbund 16 gelangen sollte.

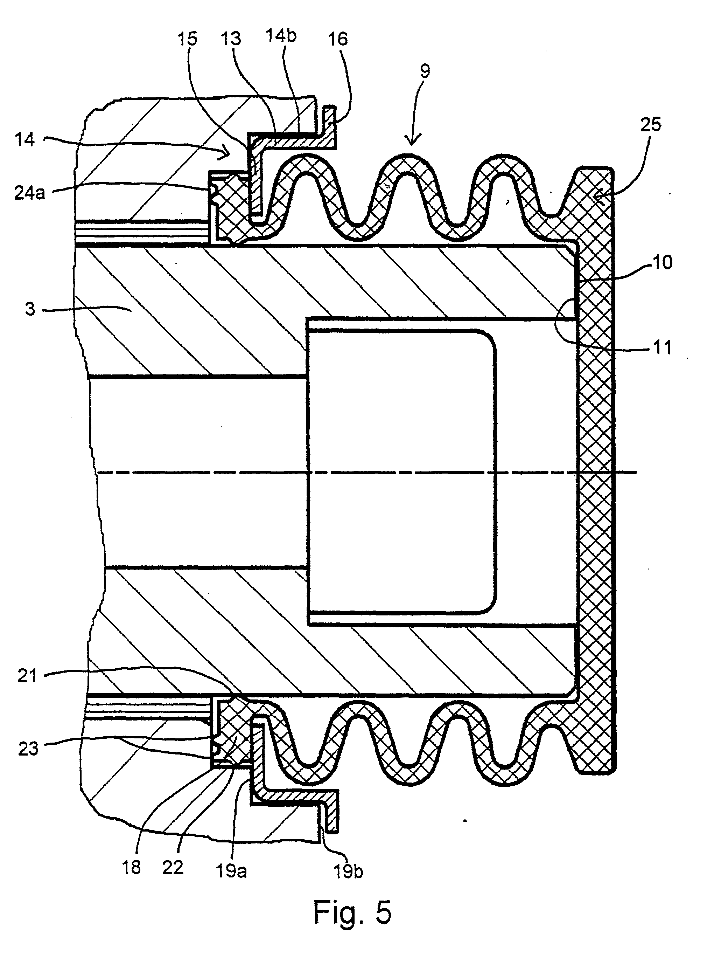

Bei der in Fig. 5 dargestellten Variante ist der Haltebereich 14 für die Halterung der Dichtung 9 in Form einer Stufenbohrung mit der Ringschulter 14b ausgebildet. Auch hier wirken die bereits erwähnten Dichtlippen 21, 22, 23 des Radialwulstes 18 zur Verbesserung des Dichteffektes, wobei bei dieser Ausführung die Dichtlippe 22 an der Ringschulter 14b anliegt, und der den Radialwulst 18 der Dichtung 9 hintergreifende Radialbund 15 der Hülse 13 an der Stirnfläche 19a der Stufenbohrung abgestützt ist.

Die Ausgestaltung nach Fig. 5 hat insbesondere den Vorteil, daß unter Verkürzung der benötigten Axiallänge für die Anbringung der Hülse 13 ein freier Ringraum zwischen dem Radialbund 16 und einer äußeren Stirnfläche 19b des Haltebereichs 14 ausgebildet ist, was ein Abnehmen des Sattels 1 von dem Führungsbolzen 3 zum Zwecke des Wechselns der Dichtung 9 überflüssig macht.

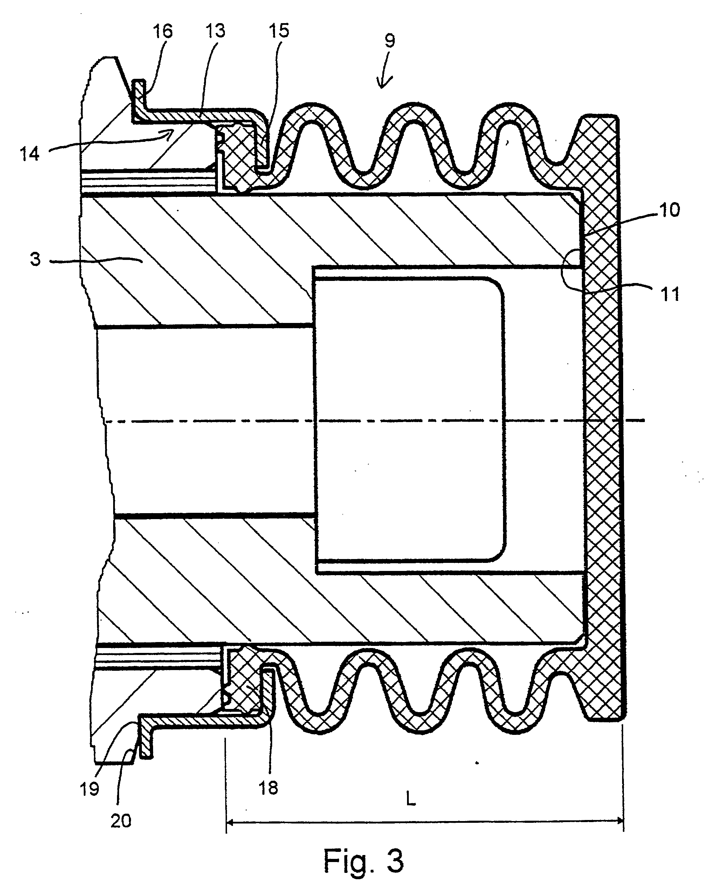

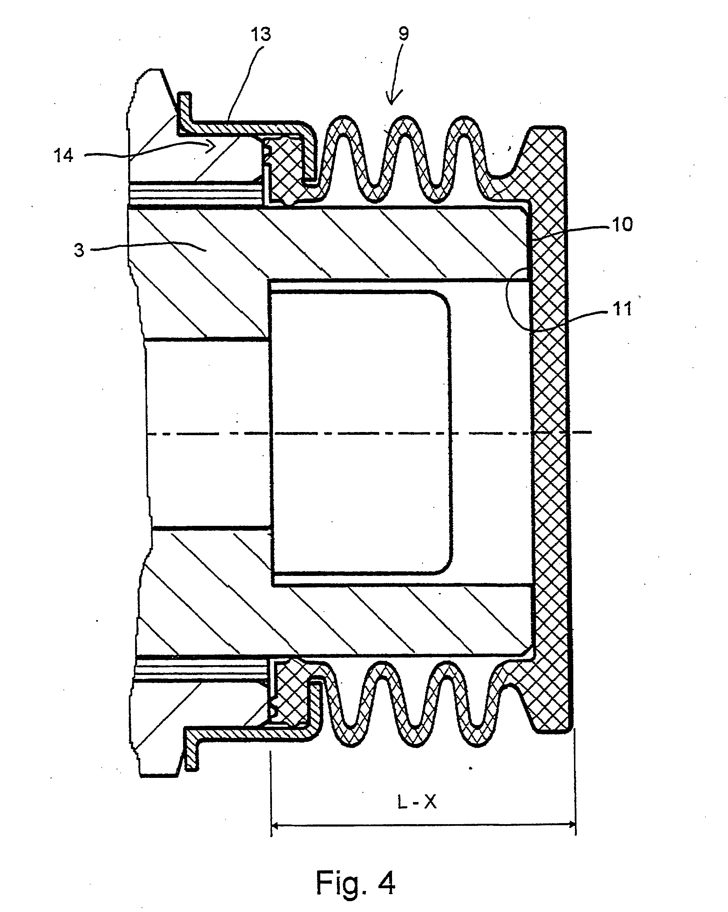

Wie den Figuren zu entnehmen ist, ist der Faltenbereich der Dichtung 9 bei neuen Bremsbelägen im wesentlichen entsprechend der Länge L gestreckt (Fig. 3) und zieht sich infolge der elastischen Rückstellkraft bei einer relativen Sattelverschiebung X wegen Belagverschleißes aus dem gespannten Zustand in einen der Länge L-X (Fig. 4) entsprechenden entspannten Zustand zusammen. D.h. die Axiallänge der in Form einer topfförmigen Faltenmanschette ausgeführten Dichtung 9 ist im entspannten Zustand zumindest kürzer als der maximale Überstand der Bolzenstirnfläche 11 über den Haltebereich 14 am Sattel 1 (Fig. 2). Dabei kann die Dichtung auch so ausgelegt sein, daß sie auch noch bei minimalem Überstand gespannt ist.

Bei den in den Zeichnungen gezeigten Ausführungsbeispielen ist der "Boden" 10 der als topfförmige Faltmanschette ausgeführten Dichtung 9 an seinem Außenumfang mit einem Wulst 25 versehen, der sich umlaufend von einem ersten Faltengrund 26 bis annähernd zur Faltenhöhe erstreckt. Dabei ist die Materialstärke im Bereich des Bodens 10 und im Bereich des Wulstes 25 bis hin zum ersten Faltengrund 26 dicker als im übrigen Faltenbereich. Durch diese relativ starke Materialausformung wird der Vorteil erzielt, daß das äußere Ende der Faltenmanschette beispielsweise beim Bremsenservice und beim Bremsentransport nicht nur für die Dichtung selbst, sondern auch für das freie Ende des Führungsbolzens 3 einen sicheren und dämpfenden Schutzbereich gegen Anschlag- und Stoßeinwirkung bildet. Beispielsweise wird dadurch gewährleistet, daß das Eigengewicht der Bremse bei Auflage des Führungsbolzens 3 von dem Wulst 25 und dem Boden 10 aufgenommen werden kann.

Die Montage bzw. Demontage der als Faltenmanschette ausgeführten Dichtung 9 gestaltet sich höchst einfach. Nachdem die Verbindung zwischen der Dichtung 9 und der Hülse 13 durch Hintergreifen des Wulstes 18 mit dem Radialbund 15 hergestellt worden ist, wird die Faltenmanschette 9 über den Führungsbolzen 3 geschoben, bis der Boden 10 zur Anlage an der Stirnseite 11 kommt (Fig. 2). Mittels Werkzeugdrucks gegen den Radialbund 16 wird dann die Hülse 13 auf den rohrförmigen Ansatz 14 bis zur Anlage an der Stirnfläche 19 gedrückt, wodurch der Faltenbereich gespannt wird, wie dies die Fig. 3 zeigt. Durch die Relativverschiebung des Sattels 1 bezüglich des Führungsbolzens 3 entspannt sich dann der Faltenbereich entsprechend Fig. 4 mit zunehmendem Belagverschleiß. Bei der Demontage wird in dem freien Ringraum zwischen der Schrägfläche 20 und dem Radialbund 16 ein Flachwerkzeug eingesetzt, und die Hülse 13 wird vom Haltebereich 14 geschoben.

Bei der Ausgestaltung nach Fig. 5 gehen die Vorgänge entsprechend vor sich, wobei der Unterschied nur darin liegt, daß die Hülse nicht auf einen rohrförmigen Ansatz aufgedrückt, sondern in eine Stufenbohrung eingedrückt wird.

### BEZUGSZEICHENLISTE

- 1: Sattel
- 2: Bremsscheibe
- 3: Führungsbolzen
- 4: Führungsbolzen ,
- 5: Bremsenträger
- 6: Bremsbelag
- 7: Bremsbelag
- 8: Durchgangsöffnung
- 9: Dichtung
- 10: Topfboden
- 11: Stirnseite
- 12: offene Seite
- 13: Halteeinrichtung
- 14, 14a, 14b: Haltebereich
- 15: Radialbund
- 16: Radialbund
- 17: Faltengrund
- 18: Radialwulst
- 19, 19a: Stirnfläche
- 20: Schrägfläche
- 21: Dichtlippe
- 22: Dichtlippe
- 23: Dichtlippe
- 24, 24a: Stirnfläche
- 25: Wulst
- 26: erster Faltengrund

- L: Länge
- x: Sattelverschiebung

## Patentansprüche

1. Gleitsattelscheibenbremse, deren Sattel (1) auf einem Führungsbolzen (3) verschieblich ist, wobei sich der Führungsbolzen (3) durch eine Durchgangsöffnung (8) des Sattels (1) erstreckt und mit seinem freien Ende aus der Durchgangsöffnung (8) herausragt und wobei eine topfförmige elastische Dichtung (9) vorgesehen ist, die einen Ringraum zwischen der Innenwand der Durchgangsöffnung (8) und dem Führungsbolzen (3) abdichtet, an dem Sattel (1) gehalten ist, und das freie Ende des Führungsbolzens (3) umschließt,
**dadurch gekennzeichnet, daß**
die Dichtung (9) zumindest dann, wenn das freie Ende des Führungsbolzens (3) maximal aus der Durchgangsöffnung (8) herausragt, derart vorgespannt ist, daß sie infolge ihrer elastischen Rückstellkraft mit ihrem Topfboden (10) an der Stirnseite (11) des freien Endes des Führungsbolzens (3) anliegt.

2. Gleitsattelscheibenbremse nach Anspruch 1, **gekennzeichnet durch** eine Halteeinrichtung (13), die lösbar an dem Sattel (1) angebracht ist und die Dichtung (9) an dem Sattel (1) hält.

3. Gleitsattelscheibenbremse nach Anspruch 2, **dadurch gekennzeichnet, daß** die Halteeinrichtung (13) einen ersten Radialansatz (15) aufweist, mit dem sie einen ersten Radialansatz (18) der Dichtung (9) hintergreift.

4. Gleitsattelscheibenbremse nach Anspruch 2 oder 3, **gekennzeichnet durch** eine die Durchgangsöffnung (8) umlaufende und in Axialrichtung des Führungsbolzens (3) ausgerichtete Ringschulter (14a, 14b), an der die Halteeinrichtung (13) lösbar befestigt ist.

5. Gleitsattelscheibenbremse nach Anspruch 4, **dadurch gekennzeichnet, daß** die Ringschulter (14a) von der Mantelfläche eines der Durchgangsöffnung (8) vorgelagerten Ringansatzes des Sattels (1) gebildet ist.

6. Gleitsattelscheibenbremse nach Anspruch 4, **dadurch gekennzeichnet, daß** die Ringschulter (14b ) von der Seitenwand eines der Durchgangsöffnung (8) vorgelagerten Sackloches gebildet ist.

7. Gleitsattelscheibenbremse nach einem der Ansprüche 4 bis 6, **dadurch gekennzeichnet, daß** die Halteeinrichtung (13) nach Art eines Preßsitzes an der Ringschulter (14a, 14b) befestigt ist,

8. Gleitsattelscheibenbremse nach einem der Ansprüche 3 bis 7, **dadurch gekennzeichnet, daß** die Halteeinrichtung (13) einen zweiten Radialansatz (16) aufweist, der zum Lösen der Halteeinrichtung (13) mit einem Werkzeug hintergriffen werden kann.

9. Gleitsattelscheibenbremse nach Anspruch 8, **gekennzeichnet durch** eine Abschrägung (20) einer bei angebrachter Halteeinrichtung (13) dem zweiten Radialansatz (16) benachbarten Stirnfläche (19) des Sattels (1).

10. Gleitsattelscheibenbremse nach einem der Ansprüche 3 bis 9, **dadurch gekennzeichnet, daß** der erste Radialansatz (18) der Dichtung (9) rechteckigen Querschnitt besitzt und Dichtlippen (21, 22, 23) aufweist, die an dem Führungsbolzen (3) der Halteeinrichtung (13) bzw. einer Stirnseite (24, 24a) des Sattels (1) anliegen.

11. Gleitsattelscheibenbremse nach einem der vorangehenden Ansprüche, **gekennzeichnet durch** einen zweiten Radialansatz (25) an einem dem freien Ende des Führungsbolzens (3) benachbarten Endabschnitt der Dichtung (9).

12. Gleitsattelscheibenbremse nach einem der vorangehenden Ansprüche, **dadurch gekennzeichnet, daß** die Dichtung (9) in dem der Stirnseite (11) des freien Endes des Führungsbolzens (3) benachbarten Bereich (10) dicker als an ihren Seitenwänden ist.

13. Gleitsattelscheibenbremse nach Anspruch 12, **dadurch gekennzeichnet, daß** der dickere Bereich der Dichtung (9) den Außenumfang des Führungsbolzens (3) teilweise umgreift.

14. Gleitsattelscheibenbremse nach einem der vorangehenden Ansprüche, **dadurch gekennzeichnet, daß** die Dichtung (9) eine Faltenmanschette ist.

## Claims

1. Floating Caliper Disk Brake whose caliper (1) slides on a guide pin (3), whereby the guide pin (3) stretches through a bore (8) in the caliper (1) and the free end of the guide pin, protruding from the bore, is equipped with a cup shaped elastic sealing element (9) that, while sealing a ring shaped space between bore (8) and guide pin (3), is held against the caliper (1) and with the other end encircles the free end of the guide pin (3),
**characterized by**
the sealing element (9), at least then when the free end of the guide pin (3) maximally protrudes from the bore (8), through its elastic return forces is preloaded in a manner that the bottom of the cup (10) abuts the face (3) of the guide pin.

2. Floating Caliper Disk Brake according to daim 1, **characterized by** a holding fixture (13) attached removable to the caliper (1) while holding the sealing element (9) to the caliper (1).

3. Floating Caliper Disk Brake according to claims 1 or 2, **characterized by** the holding fixture (13) being equipped with a radial step (15) which protrudes into the first radial step (18) of the sealing element (9).

4. Floating Caliper Disk Brake according to claims 1 or 3, **characterized by** a removable ring shoulder (14a, 14b) axially encircling the guide pin (3), attached to the holding fixture (13).

5. Floating Caliper Disk Brake according to claim 4, **characterized by** the ring shoulder (14a) having been shaped from a radial step protruding from the housing surface around the trough bore (8) of the caliper (1).

6. Floating Caliper Disk Brake according to claim 4, **characterized by** the ring shoulder (14b) being shaped from a blind hole in the sidewall of the through bore (8).

7. Floating Caliper Disk Brake according to claims 4 to 6, **characterized by** the holding fixture (13) held in place by being pressure seated in the ring shoulder (14a, 14b).

8. Floating Caliper Disk Brake according to claims 3 to 7, **characterized by** the holding fixture (13) having been equipped with a second radial step (16) that can be utilized to remove the holding fixture (13) with a tool.

9. Floating Caliper Disk Brake according to daim 8, **characterized by** a beveled (20) second radial step (16) in the face (19) of the caliper (1).

10. Floating Caliper Disk Brake according to claims 3 to 9, **characterized by** the first radial step (18) being formed to accept the rectangular shaped sealing element (9) and equipped with sealing lips (21, 22, 23) abutting the guide pin (3) or the face (24, 24a) of the caliper (1).

11. Floating Caliper Disk Brake according to one of the above claims, **characterized by** the second radial step (25) in the end of the sealing element (9) near the free end of guide pin (9).

12. Floating Caliper Disk Brake according to one of the above claims, **characterized by** the sealing element (9) being constructed thicker in the face area (11) of the guide pin (3) than in the neighboring (10) sidewalls.

13. Floating Caliper Disk Brake according to claim 12, **characterized by** the thicker portion of the sealing element (9) partially encircling the outside of the guide pin (3).

14. Floating Caliper Disk Brake according to one of the above claims, **characterized by** the sealing element (9) being a collar equipped bellows.

## Revendications

1. Frein à disque à étrier coulissant dont l'étrier (1) peut se déplacer le long d'une colonnette de guidage (3), laquelle colonnette de guidage (3) passe à travers un alésage (8) de l'étrier (1) et dont l'extrémité libre dépasse de l'alésage (8), et avec un joint (9) élastique en forme de coupelle qui assure l'étanchéité d'un espace annulaire entre la surface intérieure de l'alésage (8) et la colonnette de guidage (3), qui est fixé à l'étrier (1) et qui enveloppe l'extrémité libre de la colonnette de guidage (3),
**caractérisé en ce que**
le joint (9), du moins lorsque l'extrémité libre de la colonnette de guidage (3) dépasse de son maximum de l'alésage (8), est en pré-tension de telle sorte que, par suite de sa force de rappel élastique, il repose avec son fond (10) contre la face (11) de l'extrémité libre de la colonnette de guidage (3):

2. Frein à disque à étrier coulissant selon la revendication 1, **caractérisé par** un dispositif de maintien (13) qui est fixé à l'étrier (1) de manière démontable et qui maintient le joint (9) à l'étrier (1).

3. Frein à disque à étrier coulissant selon la revendication 2, **caractérisé en ce que** le dispositif de maintien (13) dispose d'une première collerette (15) avec laquelle il vient en prise avec une première collerette (18) du joint (9).

4. Frein à disque à étrier coulissant selon l'une quelconque des revendications 2 ou 3, **caractérisé par** un épaulement (14a, 14b) réalisé tout autour de l'alésage (8) dans le sens de l'axe de la colonnette de guidage (3) auquel le dispositif de maintien (13) est fixé de manière démontable.

5. Frein à disque à étrier coulissant selon la revendication 4, **caractérisé en ce que** l'épaulement (14a) est formé par la surface extérieure d'un collet en saillie de l'alésage (8) de l'étrier (1).

6. Frein à disque à étrier coulissant selon la revendication 4, **caractérisé en ce que** l'épaulement (14b) est formé par la surface intérieure d'un lamage au droit de l'alésage (8).

7. Frein à disque à étrier coulissant selon l'une quelconque des revendications 4 à 6, **caractérisé en ce que** le dispositif de maintien (13) est fixé à la manière d'un ajustage sur l'épaulement (14a, 14b).

8. Frein à disque à étrier coulissant selon l'une quelconque des revendications 3 à 7, **caractérisé en ce que** le dispositif de maintien (13) dispose d'une deuxième collerette (16) derrière laquelle on peut placer un outil pour déposer le dispositif de maintien (13).

9. Frein à disque à étrier coulissant selon la revendication 8, **caractérisé par** un chanfreinage (20) d'une face (19) de l'étrier (1) voisine, lorsque le dispositif de maintien (13) est en place, de la deuxième collerette (16).

10. Frein à disque à étrier coulissant selon l'une quelconque des revendications 3 à 9, **caractérisé en ce que** la première collerette (18) du joint (9) possède une section rectangulaire et dispose de lèvres d'étanchéité (21, 22, 23) qui reposent respectivement sur la colonnette de guidage (3), le dispositif de maintien (13) et une face (24, 24a) de l'étrier (1).

11. Frein à disque à étrier coulissant selon l'une quelconque des revendications précédentes, **caractérisé par** une deuxième collerette (25) au niveau de la section finale du joint (9) voisine de l'extrémité libre de la colonnette de guidage (3).

12. Frein à disque à étrier coulissant selon l'une quelconque des revendications précédentes, **caractérisé en ce que** le joint (9) est plus épais dans la zone (10) voisine de la face (11) de l'extrémité libre dé la colonnette de guidage (3) qu'au niveau de ses parois latérales.

13. Frein à disque à étrier coulissant selon la revendication 12, **caractérisé en ce que** la zone la plus épaisse du joint (9) enveloppe partiellement le pourtour extérieur de la colonnette de guidage (3).

14. Frein à disque à étrier coulissant selon l'une quelconque des revendications précédentes, **caractérisé en ce que** le joint (9) est un manchon à soufflets.
